# EUROPEAN PATENT APPLICATION

(11) **EP 4 159 348 A1**
(43) Date of publication of application: **05.04.2023**
(21) Application number: 22199399.1
(22) Date of filing: 03.10.2022
(51) Int. Cl.: B23B 47/28

(54) **METHODS FOR DRILLING AN APERTURE IN A PANEL, AND ASSEMBLY FOR DRILLING A PANEL**

(30) Priority: 04.10.2021 SG 10202111050
(71) Applicant: Rohr, Inc., Chula Vista, CA 91910-2098 (US)
(72) Inventor: TAN, Ann Soon Anson, 823269 Singapore (SG); ZHOU, Jianhua, 530513 Singapore (SG); LIM, Ee Hwee, S541205 Singapore (SG); EDWARD, Jeffry, 499638 Singapore (SG)
(74) Representative: Dehns

(57) **Abstract**

A method (400) includes drilling a first aperture (146) in a panel (22) that extends between a panel first surface (48) and a panel second surface (44). The first aperture (146) projects into the panel (22) along a first centerline (146) from the panel first surface (48). The first centerline (146) is angularly offset from the panel first surface (48) by a first angle (84). A first tool (150) is arranged with the panel (22). The first tool (150) includes a support structure (152), a locator (156) and a drill guide (154). The locator (156) is mounted to the support structure (152) and projects into the first aperture (146). The drill guide (154) is mounted to the support structure (152) and is arranged adjacent the panel second surface (44). A second aperture (220) is drilled in the panel (22) using the drill guide (154). The second aperture (220) projects into the panel (22) along a second centerline (222) from the panel second surface (44) to the first aperture (146). The second centerline (222) is coaxial with the first centerline (148).

## Description

### BACKGROUND

### 1. Technical Field

This disclosure (invention) relates generally to forming an aperture in a panel.

### 2. Background Information

A nacelle inner barrel for an aircraft propulsion system may be mounted to another component such as a fan case via an attachment ring. The attachment ring may be mounted to the inner barrel via a plurality of fasteners, where each fastener projects through a respective fastener aperture in the inner barrel. Various tools and method are known in the art for forming the fastener apertures in the inner barrel. While these known tools and methods have various benefits, there is still room in the art for improvement.

### SUMMARY OF THE DISCLOSURE

According to an aspect of the present invention, a method is provided involving a panel. During this method, a first aperture is drilled in the panel. The panel extends between a panel first surface and a panel second surface arranged opposite the panel first surface. The first aperture projects into the panel along a first centerline from the panel first surface. The first centerline is angularly offset from the panel first surface by a first angle. A first tool is arranged with the panel. The first tool includes a support structure, a locator and a drill guide. The locator is mounted to the support structure and projects into the first aperture. The drill guide is mounted to the support structure and is arranged adjacent the panel second surface. A second aperture is drilled in the panel using the drill guide. The second aperture projects into the panel along a second centerline from the panel second surface to the first aperture. The second centerline is coaxial with the first centerline.

According to another aspect of the present invention, a method is provided involving a panel and a mount. During this method, the mount is arranged with the panel. The mount includes a fastener aperture. The panel extends from a panel first surface to a panel second surface opposite the panel first surface. The mount is engaged with the panel first surface. A first tool is arranged with the mount. The first tool includes a drill guide. The first tool is configured to adjust alignment of a bore of the drill guide with the fastener aperture along a plurality of directions. A drill bit is inserted sequentially through the bore of the drill guide and the fastener aperture to the panel first surface. A first aperture is drilled in the panel. The first aperture projects into the panel along a first centerline from the panel first surface. The first centerline is angularly offset from the panel first surface by an acute angle.

According to another aspect of the present invention, an assembly is provided for drilling a panel. This assembly includes a support structure, a locator and a drill guide. The support structure includes a first support, a second support and a channel. The first support includes a first leg and is mechanically attached to the second support by an adjustment device. The second support includes a second leg. The channel is formed between the first leg and the second leg. The locator is connected to the first leg. The locator projects out from a first surface of the first leg along a first centerline into the channel towards the second leg. The locator is configured to mate with a first aperture in the panel. The first centerline is angularly offset from the first surface by an acute angle. The drill guide is connected to the second leg. A bore extends through the drill guide along a second centerline that is coaxial with the first centerline. The drill guide is configured to receive a drill bit within the bore for drilling a second aperture into the panel that extends to the first aperture.

The following optional features may be applied to any of the above aspects.

The panel may include a first skin, a second skin and a cellular core between and connected to the first skin and the second skin. The first skin may form the panel first surface. The second skin may form the panel second surface. The first aperture may be drilled such that the first aperture projects through the first skin and at least partially into the cellular core without extending through the second skin.

A second tool may be arranged with the panel. The second tool may include a second support structure, a locator and a second drill guide. The locator may be mounted to the second support structure and may project into the first aperture. The second drill guide may be mounted to the second support structure and may be arranged adjacent the panel second surface. A second aperture may be drilled in the panel using the second drill guide. The second aperture may project into the panel along a second centerline from the panel second surface to the first aperture. The second centerline may be coaxial with the first centerline.

The first angle may be an acute angle.

The acute angle may be between eighty-five degrees and eighty-nine degrees.

The first centerline may be perpendicular to the panel second surface.

The locator may be configured as or otherwise include a cylindrical pin.

The drill guide may be configured as or otherwise include a bushing. The second aperture may be drilled using a drill bit that extends through a bore of the bushing.

The support structure may include a first support, a second support and a channel between the first support and the second support. The first support may be located adjacent the panel first surface. The locator may be mounted to the first support. The second support may be located adjacent the panel second surface. The drill guide may be mounted to the second support. The panel may project into the channel.

The locator may project through the first support into the first aperture.

The drill guide may project into the second support.

The first support may be connected to the second support by an adjustable joint.

The second support may include a slot. The first support may be connected to the second support by a fastener mated with the slot.

A mount may be arranged with the panel. The mount may include a fastener aperture. The first aperture may be drilled using a drill bit that extends through the fastener aperture.

A second tool may be arranged with the mount. The second tool may include a second support structure and a second drill guide mounted to the second support structure. The drill bit may extend sequentially through a bore of the second drill guide and the fastener aperture to the panel.

The second tool may be moved along the mount to align the bore of the second drill guide with the fastener aperture.

The second support structure may be moved along the mount to align the bore of the second drill guide with the fastener aperture. The second tool may also include a frame. The second support structure may be configured to translate within the frame.

The panel may be configured as or otherwise include an acoustic panel. The mount may be configured as or otherwise include an attachment ring for the acoustic panel.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic side sectional illustration of an assembly for an aircraft propulsion system.
FIG. 2 is a partial schematic perspective illustration of a structural panel and a panel mount.
FIG. 3 is a partial cutaway illustration of a portion of the structural panel.
FIG. 4 is a flow diagram of a method involving a structural panel and a panel mount.
FIG. 5 is a partial schematic sectional illustration of a structural panel preform.
FIG. 6 is a partial schematic sectional illustration of the panel preform mated with the panel mount.
FIG. 7 is a perspective illustration of a pilot tool.
FIGS. 8A-C are illustrations of various views of a frame for the pilot tool.
FIGS. 9A-C are illustrations of various views of a support structure for the pilot tool.
FIG. 10A is a partial sectional illustration of the pilot tool.
FIG. 10B is a partial cross-sectional illustration of the pilot tool.
FIG. 10C is an exploded view illustration of certain components of the pilot tool.
FIG. 11 is a partial schematic illustration of the pilot tool arranged with the panel preform and the panel mount.
FIG. 12 is a partial schematic illustration of a drill bit, guided by the pilot tool, forming a pilot aperture in the panel preform.
FIG. 13 is a side sectional illustration of a finishing tool.
FIGS. 14A and 14B are perspective illustrations of the finishing tool arranged with the panel preform and the panel mount.
FIG. 15 is a partial schematic sectional illustration of the finishing tool arranged with the panel preform and the panel mount.
FIG. 16 is a partial schematic sectional illustration of a drill bit, guided by the finishing tool, forming a coupling aperture in the panel preform.

### DETAILED DESCRIPTION

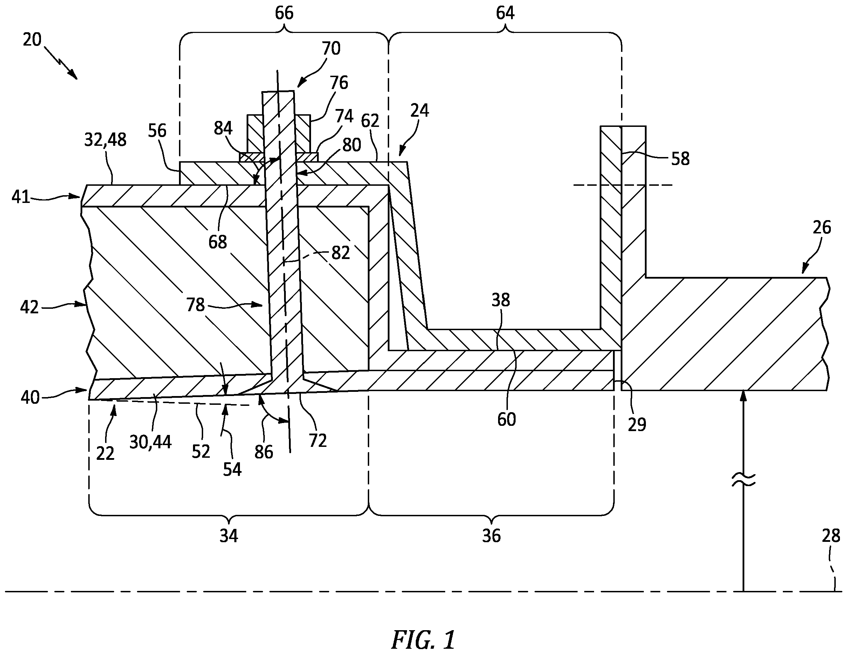

FIG. 1 illustrates an assembly 20 for an aircraft propulsion system such as, but not limited to, a turbofan propulsion system or a turbojet propulsion system. This assembly 20 includes at least one structural panel 22 and a panel mount 24. The assembly of FIG. 1 also include another component 26 for the aircraft propulsion system.

The structural panel 22 may be configured as an acoustic panel for attenuating sound; e.g., noise. The structural panel 22, for example, may be configured to attenuate noise generated by the aircraft propulsion system. With such a configuration, the structural panel 22 may be configured with a nacelle of the aircraft propulsion system. The structural panel 22, for example, may be configured as or otherwise included as part of an inner barrel, an inlet lip structure, an inner fixed structure, a translating sleeve, etc. The present disclosure, however, is not limited to sound attenuation applications nor aircraft propulsion system applications. The structural panel 22 and the panel mount 24, for example, may be configured for another structure / system of an aircraft outside of the aircraft propulsion system.

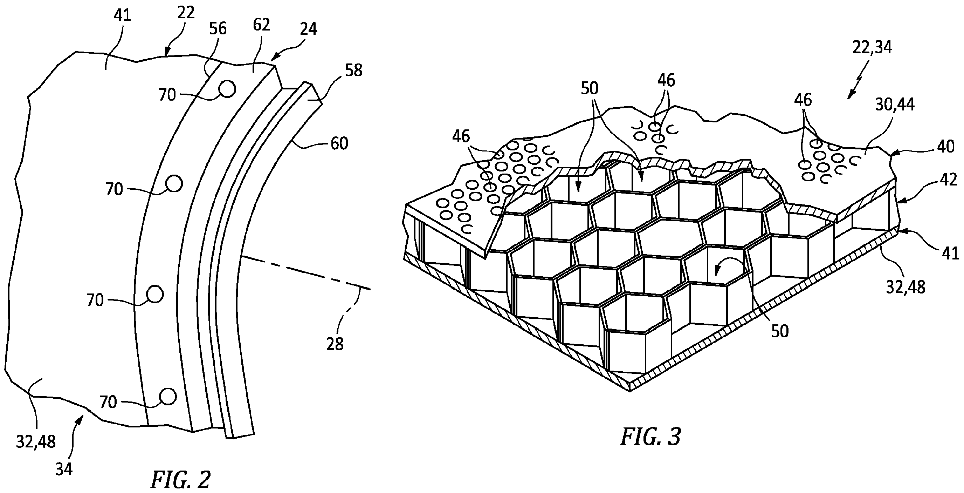

The structural panel 22 of FIG. 1 extends longitudinally along a longitudinal centerline 28 to a distal longitudinal (e.g., an aft, downstream) end 29 of the structural panel 22, which longitudinal centerline 28 may be an axial centerline of the assembly 20. The structural panel 22 extends radially between and to an inner side 30 of the structural panel 22 and an outer side 32 of the structural panel 22. Referring to FIG. 2, the structural panel 22 extends circumferentially about (e.g., partially or completely around) the longitudinal centerline 28.

The structural panel 22 of FIG. 1 includes a base section 34 and a flange section 36. These panel sections 34 and 36 extend circumferentially about (e.g., partially or completely around) the longitudinal centerline 28. The panel base section 34 extends vertically (e.g., radially) between and to the panel inner side 30 and the panel outer side 32. The panel flange section 36 is connected to the panel base section 34 at the panel end 29. The panel flange section 36 of FIG. 1, for example, projects longitudinally out from the panel base section 34 to the panel end 29. The panel flange section 36 extends vertically between the panel inner side 30 and an outer side 38 of the panel flange section 36, where the flange outer side 38 is recessed from the panel outer side 32 by a vertical distance.

Referring to FIG. 3, the structural panel 22 and its panel base section 34 include an inner skin 40, an outer skin 41 and a cellular core 42. The structural panel 22 and one or more of its panel sections 34 and 36, of course, may also include one or more additional elements (e.g., layers) such as, for example, one or more doublers, one or more additional cellular cores and/or one or more septums / inter-core layers.

The inner skin 40 forms an inner surface 44 of the structural panel 22 located at the panel inner side 30. This inner skin 40 of FIG. 3 is configured as a porous panel (e.g., a perforated sheet of material) with one or more pores 46; e.g., perforations, through-holes, etc. The outer skin 41 forms an outer surface 48 of the structural panel 22 located at the panel outer side 32. This outer skin 41 of FIG. 3 is configured as a solid, non-porous panel; e.g., non-perforated sheet of material. The cellular core 42 is arranged vertically (e.g., radially) between the inner skin 40 and the outer skin 41. The cellular core 42 of FIG. 3, for example, extends vertically between and is connected (e.g., bonded) to the inner skin 40 and the outer skin 41. This cellular core 42 of FIG. 3 includes a plurality of cavities 50 vertically between the inner skin 40 and the outer skin 41. Each of these cavities 50 may be fluidly coupled with one or more of the pores 46 (e.g., perforations) in the inner skin 40. The cellular core 42 may be configured as a honeycomb core. The present disclosure, however, is not limited to the foregoing exemplary cellular core 42 nor the foregoing structural panel configuration. For example, in other embodiments, the inner skin 40 may be solid, non-porous and the outer skin 41 may be porous. In still other embodiments, both the inner and the outer skins 40 and 41 may be solid, non-porous.

At least a portion of the panel inner surface 44 of FIG. 1 is non-parallel with a corresponding (e.g., longitudinally and/or circumferentially overlapping) portion of the panel outer surface 48. The panel inner surface 44, for example, is angularly offset from the panel outer surface 48 (see plane 52 parallel with surface 48) by an acute angle 54. This acute angle 54 may be between one degree (1°) and five degrees (5°); e.g., between two degrees (2°) and three degrees (3°). The present disclosure, however, is not limited to such an exemplary acute angle. For example, in other embodiments, the acute angle 54 may be greater than five degrees (5°). At least a portion or an entirety of the inner skin 40 and its panel inner surface 44 may have a straight-line sectional geometry, a (e.g., slightly) curved sectional geometry and/or otherwise when viewed, for example, in a reference plane parallel with the longitudinal centerline 28. This geometry may define the angular offset between the surfaces 44 and 48.

The structural panel 22 may be constructed from any suitable material. The structural panel 22 and its elements 34, 36 and 41-42 (see FIG. 3), for example, may be constructed from metal, composite material or a combination thereof. Examples of the metal include, but are not limited to, aluminum (Al) and titanium (Ti). The composite material may include fiber reinforcement within a polymer matrix; e.g., thermoplastic or thermoset material. Examples of the fiber reinforcement include, but are not limited to, fiberglass, carbon fiber and/or aramid fibers. The present disclosure, however, is not limited to the foregoing exemplary structural panel materials.

The panel mount 24 may be configured as an attachment ring for the structural panel 22. This panel mount 24, for example, may provide a structural interface between the structural panel 22 and the other component 26 of the aircraft propulsion system; e.g., a fan case.

The panel mount 24 of FIG. 1 extends longitudinally along the longitudinal centerline 28 between and to a first end 56 of the panel mount 24 and a second end 58 of the panel mount 24. The panel mount 24 extends radially between and to an inner side 60 of the panel mount 24 and an outer side 62 of the panel mount 24. Referring to FIG. 2, the panel mount 24 extends circumferentially about (e.g., partially or completely around) the longitudinal centerline 28.

The panel mount 24 of FIG. 1 includes a channeled base section 64 and a flange section 66. These mount sections 64 and 66 extend circumferentially about (e.g., partially or completely around) the longitudinal centerline 28. The mount base section 64 extends vertically between and to the mount inner side 60 and the mount outer side 62. The mount base section 64 is disposed at the mount second end 58. The mount flange section 66 is connected to the mount base section 64 at the mount first end 56. The mount flange section 66 of FIG. 1, for example, projects longitudinally out from the mount base section 64 to the mount first end 56. The mount flange section 66 extends vertically between the mount outer side 62 and an inner side 68 of the mount flange section 66, where the flange inner side 68 is recessed from the mount inner side 60 by a vertical distance.

The panel mount 24 may be constructed from any suitable material. The panel mount 24 and its elements 64 and 66, for example, may be constructed from metal. Examples of the metal include, but are not limited to, aluminum (Al) and titanium (Ti). The present disclosure, however, is not limited to the foregoing exemplary panel mount materials.

The panel mount 24 is mated with the structural panel 22 at the panel end 29. The mount base section 64 of FIG. 1, for example, is abutted vertically against (e.g., contacting) the panel flange section 36 at its flange outer side 38. The mount base section 64 is also abutted longitudinally against (e.g., contacting) the panel base section 34. The mount flange section 66 is abutted vertically against (e.g., contacting) the panel base section 34 at the panel outer side 32. The panel mount 24 is attached to the structural panel 22 by one or more mechanical fasteners 70, where each fastener 70 may include a bolt 72, a washer 74 and a nut 76. Each bolt 72 of FIG. 1 extends through a fastener aperture 78 in the structural panel 22 and its panel base section 34 as well as a fastener aperture 80 in the panel mount 24 and its mount flange section 66. A head of the bolt 72 may be seated in a recess into the structural panel 22 at the panel inner surface 44. The washer 74 and the nut 76 are mated with a shank of the bolt 72 such that the mount flange section 66 is clamped (e.g., sandwiched) vertically between (A) the washer 74 and the nut 76 and (B) the structural panel 22.

Each fastener aperture 78 extends vertically through the structural panel 22 and its panel base section 34 along a respective aperture centerline 82. This aperture centerline 82 may be angularly offset from the panel outer surface 48 by an acute angle 84. This acute angle 84 may be between eighty-five degrees (85°) and eighty-nine degrees (89°); e.g., between eighty-seven degrees (87°) and eighty-eight degrees (88°). The present disclosure, however, is not limited to such an exemplary acute angle. For example, in other embodiments, the acute angle 84 may be less than eighty-five degrees (85°). However, since the panel surfaces 44 and 48 are non-parallel, the aperture centerline 82 may be angularly offset from the panel inner surface 44 by another angle 86 that is different than the acute angle 84. The angle 86, for example, may be a right angle (90°) such that the aperture centerline 82 is perpendicular to the panel inner surface 44. With this arrangement, the bolt head may be arranged flush with the panel inner surface 44.

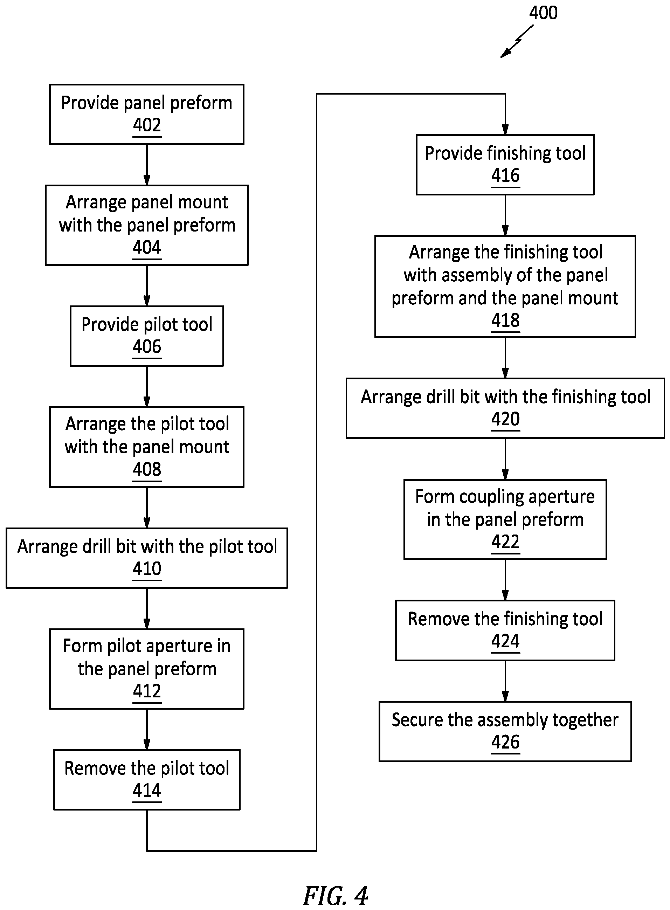

Forming the fastener apertures 78 in the structural panel 22 may be difficult given the canted orientation of the fastener apertures 78 to the panel outer surface 48, particularly where a worn structural panel is replaced with a new replacement structural panel while reusing the panel mount 24 and its already formed fastener apertures 80. FIG. 4 is a flow diagram of a method 400 during which one or more fastener apertures 78 are formed in such a replacement structural panel. The method 400, of course, may also be performed to form the fastener apertures 78 in an original equipment structural panel as well. For ease of description, the method 400 refers to the structural panel 22 and the panel mount 24 described above. However, the method 400 may alternatively be performed for structural panels and/or panel mounts with alternative configurations.

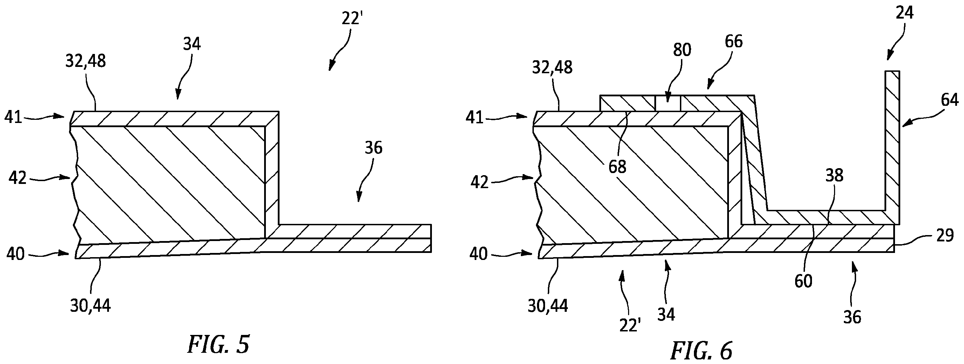

In step 402, a structural panel preform 22' is provided. Referring to FIG. 5, this structural panel preform 22' may have substantially the same configuration as the structural panel 22 of FIG. 1; however, the structural panel preform 22' may not include any (or some) of the fastener apertures 78 (see FIG. 1).

In step 404, the panel mount 24 is arranged with the structural panel preform 22'. For example, referring to FIG. 6, the mount base section 64 is abutted vertically against the panel flange section 36 at its flange outer side 38. The mount base section 64 is also abutted longitudinally against the panel base section 34. The mount flange section 66 is abutted vertically against the panel base section 34 at the panel outer side 32.

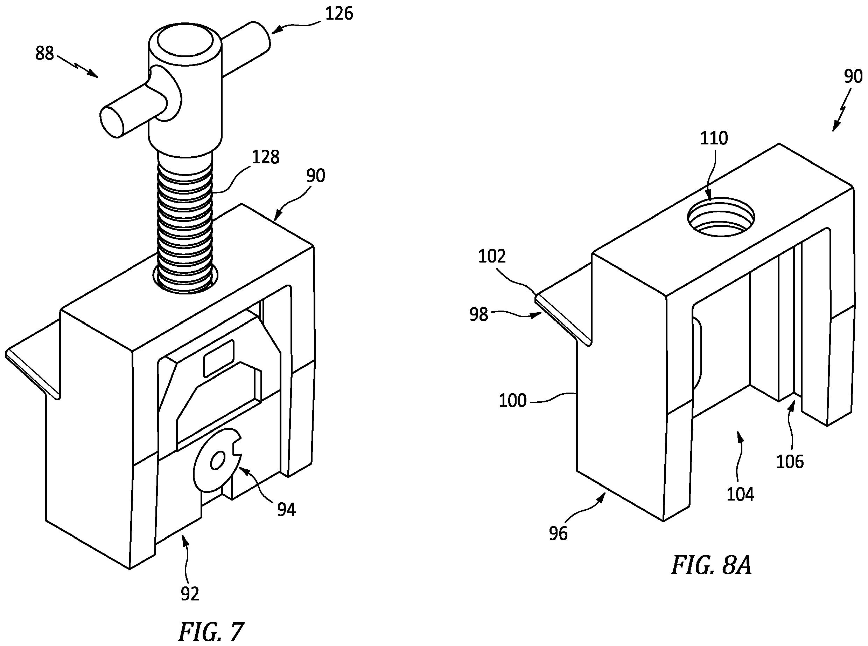

In step 406, a pilot tool 88 is provided. Referring to FIG. 7, this pilot tool 88 includes a tool frame 90, a tool support structure 92 and a drill guide 94; e.g., a metal bushing.

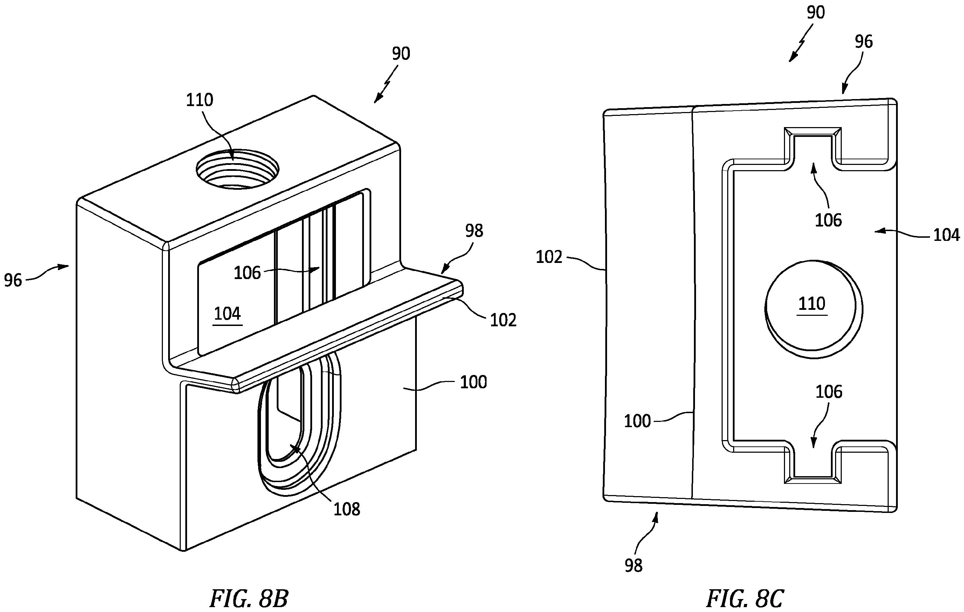

Referring to FIGS. 8A-C, the tool frame 90 includes a base section 96 and a flange section 98 connected to the frame base section 96. The frame flange section 98 projects out from a surface 100 of the frame base section 96 to a distal end 102 of the frame flange section 98. The frame flange section 98 of FIGS. 8A and 8B is arranged intermediately (e.g., about midway) along a length of the tool frame 90. Referring to FIGS. 8A and 8C, the frame base section 96 is configured with a channel 104 and one or more tracks 106 (e.g., slots), where the tracks 106 are disposed on opposing sides of the channel 104. Referring to FIG. 8B, the frame base section 96 includes a port 108 (e.g., an elongated slot) that extends into the frame base section 96 from the base section surface 100 to the channel 104. The frame base section 96 also includes a threaded aperture 110 (e.g., a tapped hole) that extends into the frame base section 96 to an end of the channel 104.

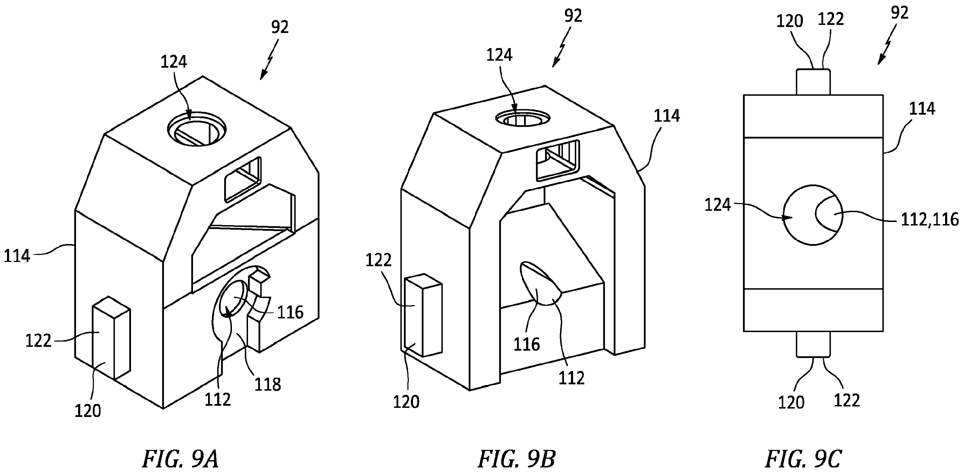

Referring to FIGS. 9A-C, the tool support structure 92 is configured as a carriage for the drill guide 94 (see FIG. 7). The tool support structure 92 of FIGS. 9A and 9B, for example, includes a drill guide receptacle 112 configured to receive the drill guide 94 (see FIG. 7). This drill guide receptacle 112 is configured in a base section 114 of the tool support structure 92, and includes a bore 116 and a counter-bore 118. The tool support structure 92 of FIGS. 9A-C includes one or more sliders 120; e.g., lugs. These sliders 120 are arranged on opposing sides of the structure base section 114. Each of the sliders 120 projects out from the structure base section 114 to a respective distal end 122. The tool support structure 92 of FIGS. 9A-C includes an adjustment device receptacle 124 in an end of the support structure 92.

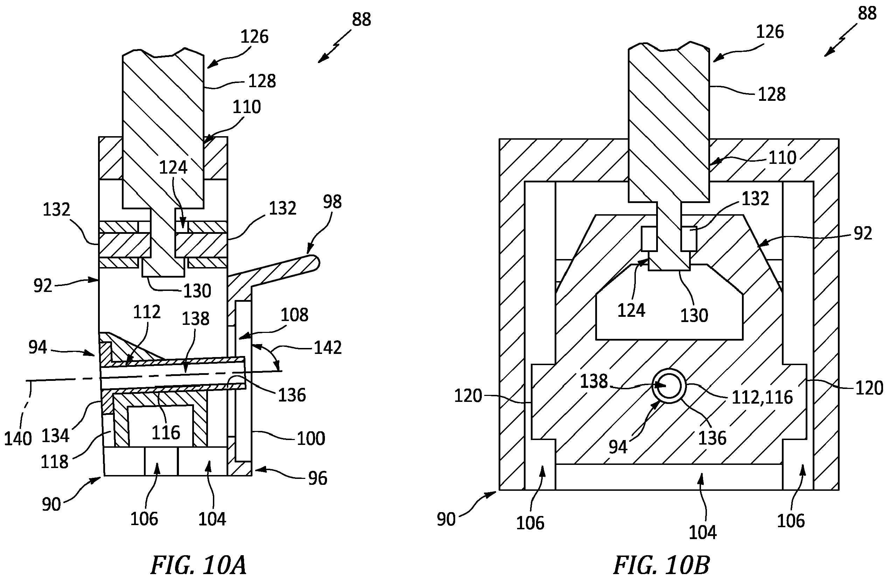

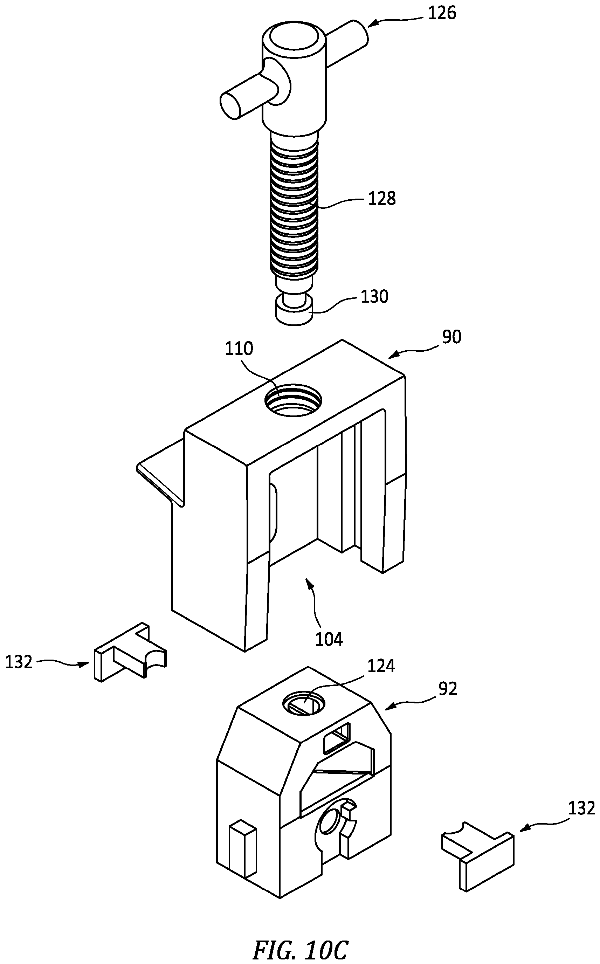

Referring to FIGS. 10A and 10B, the tool support structure 92 is mated with the tool frame 90. The tool support structure 92, for example, is inserted into the channel 104, where each of the sliders 120 is mated with (e.g., projects into) a respective one of the tracks 106 (see FIG. 10B). The tool support structure 92 may be coupled to the tool frame 90 by an adjustment device 126. Referring to FIG. 10C, this adjustment device 126 includes a threaded shaft 128 and a bearing 130 at an end of the threaded shaft 128. Referring to FIGS. 10A and 10B, the threaded shaft 128 is threaded into the threaded aperture 110. The bearing 130 is disposed within the adjustment device receptacle 124, and may be rotatably secured using one or more clips 132 (see also FIG. 10C). The drill guide 94 is mated with the drill guide receptacle 112. An annular base 134 of the drill guide 94, for example, is disposed within the receptacle counterbore 118. A tubular extension 136 of the drill guide 94 is disposed within the receptacle bore 116.

Referring to FIG. 10A, the drill guide 94 has a bore 138 that extends through the drill guide 94 along a bore centerline 140. This bore centerline 140 is angularly offset from the base section surface 100 by an acute angle 142. This acute angle 142 may be selected to be equal to the acute angle 84 of FIG. 1.

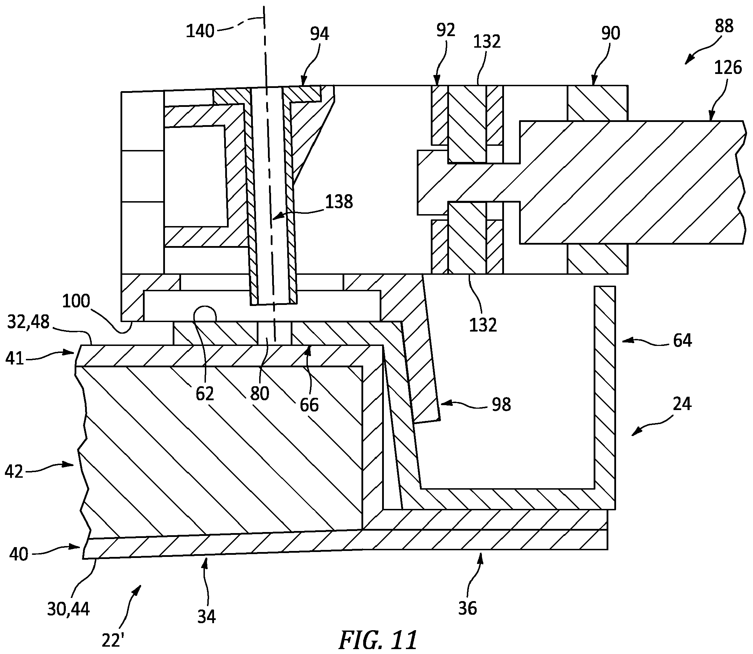

In step 408, the pilot tool 88 is arranged with the panel mount 24. For example, referring to FIG. 11, the base section surface 100 is vertically abutted against (e.g., contacting) the mount flange section 66. The frame flange section 98 is inserted into a channel of the mount base section 64, and longitudinally abutted against (e.g., contacting) the mount base section 64. The tool frame 90 may be slid laterally (e.g., circumferentially; in and/or out of plane of FIG. 11) along the panel mount 24 to laterally align the drill guide bore 138 with a respective one of the fastener apertures 80 in a lateral direction. In addition or alternatively, the adjustment device 126 may be rotated such that the tool support structure 92 moves within the tool frame 90. The tool support structure 92 may thereby be translated longitudinally along / relative to the panel mount 24 to longitudinally align the drill guide bore 138 with the respective fastener aperture 80 in a longitudinal direction.

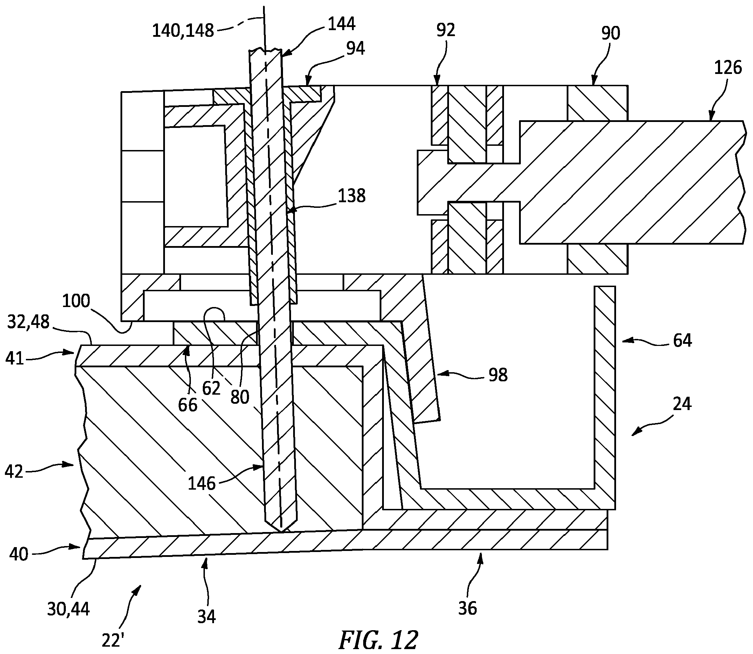

In step 410, a drill bit 144 is arranged with the pilot tool 88. For example, the drill bit 144 of FIG. 12 is inserted into and projects sequentially through the drill guide bore 138 and the respective fastener aperture 80 to the panel outer surface 48 (prior to the panel preform drilling shown in FIG. 12). With this arrangement, the drill guide 94 may maintain the drill bit 144 at an acute angle to the panel outer surface 48.

In step 412, a pilot aperture 146 is formed (e.g., drilled) in the structural panel preform 22'. For example, referring to FIG. 12, the drill bit 144 is rotated via a drill to drill (e.g., cut) the pilot aperture 146 into the structural panel preform 22'. By providing a guide for the drill bit 144 via the drill guide 94, the drill bit 144 may pierce the panel outer surface 48 without, for example, walking to a different position. This may facilitate proper alignment between the respective fastener aperture 80 and the pilot aperture 146.

The pilot aperture 146 projects along an aperture centerline 148 (e.g., partially) into the structural panel preform 22'. The pilot aperture 146, for example, may project along its aperture centerline 148 through the outer skin 41 and at least partially into the cellular core 42, or through the cellular core 42 to the inner skin 40. However, the pilot aperture 146 typically will not project into and/or through the inner skin 40. The aperture centerline 148 of FIG. 12 is angularly offset from the panel outer surface 48 by an acute angle. This acute angle is equal to the acute angle 84 of FIG. 1.

In step 414, the pilot tool 88 is removed.

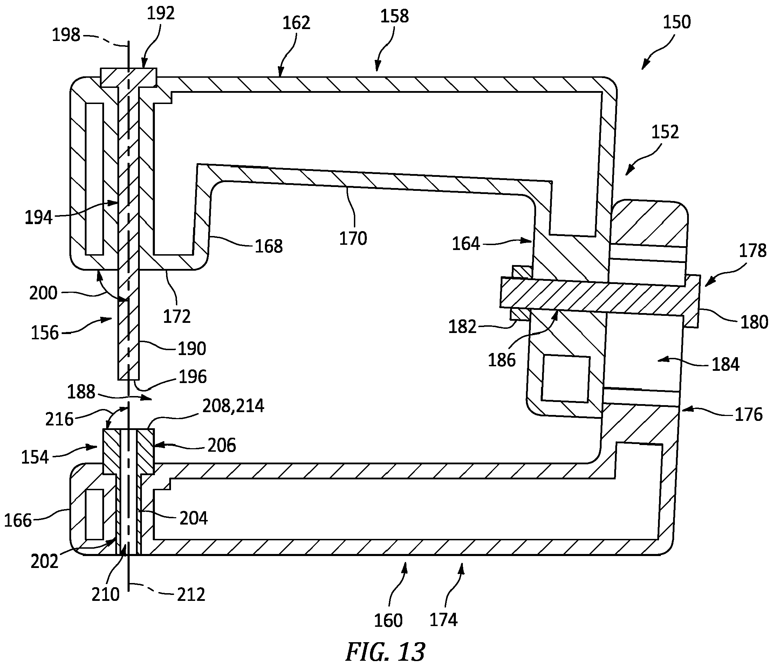

In step 416, a finishing tool 150 is provided. Referring to FIG. 13, this finishing tool 150 includes a tool support structure 152, a drill guide 154 and a tool locator 156.

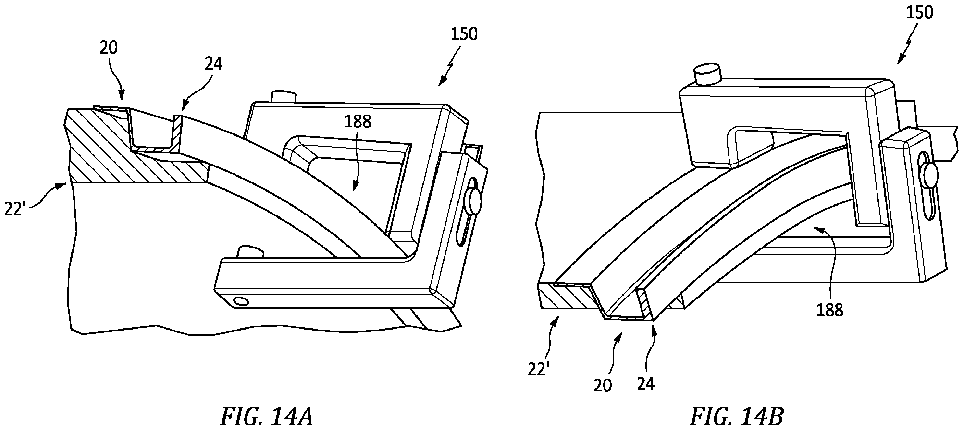

The tool support structure 152 is configured as a channeled frame that wraps around an edge of the assembly 20 (see FIGS. 14A and 14B). The tool support structure 152 of FIG. 13, for example, includes a locator support 158 and a drill support 160; e.g., a metal bushing.

The locator support 158 of FIG. 13 is configured with a channeled sectional geometry when viewed from a reference plane; e.g., plane of FIG. 13. This locator support 158, for example, includes a locator support leg 162 and a locator support mount 164. The locator support leg 162 is connected to and projects out from the locator support mount 164 to an open end 166 of the tool support structure 152. The locator support leg 162 may be configured with a protrusion 168 (e.g., a bumper, a land, etc.) at the structure open end 166. This protrusion 168 projects out from a base 170 of the locator support leg 162 (in a direction towards the drill support 160) to a land surface 172. The locator support mount 164 is disposed at a closed end of the tool support structure 152. The locator support mount 164 projects out from the locator support leg 162 and its base 170 (in a direction towards the drill support 160) to a distal end.

The drill support 160 of FIG. 13 is configured with an L-shaped sectional geometry when viewed from the reference plane; e.g., plane of FIG. 13. This drill support 160, for example, includes a drill support leg 174 and a drill support mount 176. The drill support leg 174 is connected to and projects out from the drill support mount 176 to the structure open end 166. The drill support mount 176 is disposed at the structure closed end. The drill support mount 176 projects out from the drill support leg 174 (in a direction towards the locator support 158) to a distal end.

The drill support 160 is attached to the locator support 158 by an adjustment device 178. The adjustment device 178 is configured to secure the drill support 160 and the locator support 162 together during a first mode (e.g., during use / drilling). The adjustment device 178 is further configured to facilitate relative movement (e.g., sliding) between the drill support 160 and the locator support 158 during a second mode (e.g., during finishing tool 150 setup and/or removal). The adjustment device 178 of FIG. 13, for example, includes a bolt 180 and a nut 182. The bolt 180 is mated with and extends through an elongated slot 184 in the drill support mount 176 and a (e.g., circular) hole 186 in the locator support mount 164. With this arrangement, the drill support 160 and the locator support 158 may be clamped together between a head of the bolt 180 and the nut 182 during the first mode, and the bolt 180 may move (e.g., translate) within the slot 184 during the second mode where the nut 182 is loosened for adjustment.

With the foregoing configuration, the tool support structure 152 includes a channel 188; e.g., an assembly receptacle. This channel 188 projects (e.g., partially) into the tool support structure 152 from the open end 166 to the locator support mount 164. The channel 188 extends within the tool support structure 152 between the locator support leg 162 and the drill support leg 174. The channel 188 extends through the tool support structure 152 along the locator support 158 and the drill support 160.

The tool locator 156 of FIG. 13 includes a locator pin 190 (e.g., a cylindrical rod) and a locator head 192 connected to the locator pin 190. The locator pin 190 is mated with an aperture 194 (e.g., a pin hole) in the locator support leg 162, and projects out from the land surface 172 to a distal end 196. A centerline 198 of the tool locator 156 and its locator pin 190 is angularly offset from the land surface 172 by an acute angle 200. This acute angle 200 is equal to the acute angle 84 of FIG. 1. The locator head 192 is seated within a counterbore in the base 170 of the locator support leg 162. The tool locator 156 may be removably mounted to the locator support leg 162. Alternatively, the tool locator 156 may be fixedly attached (e.g., bonded with an adhesive) to the locator support leg 162, which fixed attachment may reduce or prevent (e.g., even slight) movement between the tool locator 156 and the locator support leg 162.

The drill guide 154 is mounted to the drill support leg 174. The drill guide 154 of FIG. 13, for example, includes a tubular extension 202 that projects into and may extend through an aperture 204 (e.g., a bushing hole) in the drill support leg 174. The drill guide 154 of FIG. 13 also includes an annular boss 206, which is seated in a counterbore in the drill support leg 174. This annular boss 206 projects out from the drill support leg 174 (in a direction towards the tool locator 156 / the locator support leg 162) to a distal end 208. The drill guide 154 has a bore 210 that extends through the drill guide 154 along a bore centerline 212. This bore centerline 212 is arranged (or arrangeable) coaxial with the locator centerline 198. In the specific embodiment of FIG. 13, the bore centerline 212 may be angularly offset from an annular surface 214 of the drill guide 154 at its distal end 208 by an angle 216 different than the acute angle 200; e.g., the angle 216 may be a right angle (90°), or about ninety degrees.

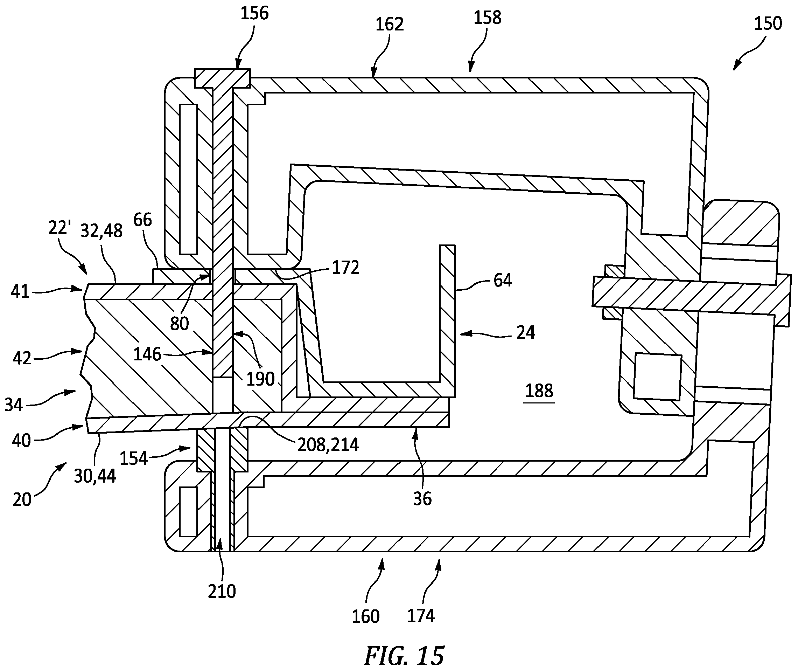

In step 418, the finishing tool 150 is arranged with the assembly 20 and its elements 22' and 24. For example, referring to FIGS. 14A and 14B, the assembly 20 and its elements 22' and 24 are received within the channel 188. The annular surface 214 of FIG. 15 may be abutted vertically against (e.g., fully contacting) the panel inner surface 44. The land surface 172 may be abutted against (e.g., fully contacting) the panel mount 24 and its mount flange section 66. The tool locator 156 and its locator pin 190 are mated with (e.g., project into / through) the respective fastener aperture 80 and the previously formed pilot aperture 146.

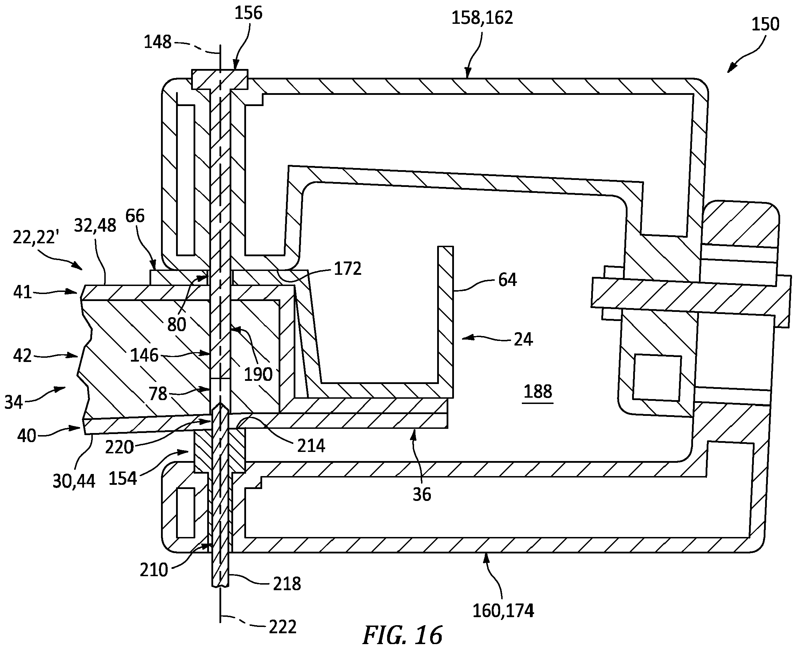

In step 420, a drill bit 218 is arranged with the finishing tool 150. For example, the drill bit 218 of FIG. 16 is inserted into and projects through the drill guide bore 210 to the panel inner surface 44 (prior to the panel preform drilling shown in FIG. 16). With this arrangement, the drill guide 154 may maintain the drill bit 218 in alignment with the pilot aperture 146 on the other side of the structural panel preform 22'. This drill bit 218 may be the same drill bit used in the step 412, or a different drill bit.

In step 422, a coupling aperture 220 is formed (e.g., drilled) in the structural panel preform 22'. For example, referring to FIG. 16, the drill bit 218 is rotated via a drill (or the drill) to drill (e.g., cut) the coupling aperture 220 into the structural panel preform 22'. By providing a guide for the drill bit 218 via the drill guide 154, the drill bit 218 may pierce the panel inner surface 44 while maintaining alignment with the previously formed pilot aperture 146. This may facilitate proper alignment between the respective apertures 80, 146 and 210, and formation of the respective fastener aperture 78 in the structural panel preform 22'.

The coupling aperture 220 projects along an aperture centerline 222 (e.g., partially) into the structural panel preform 22'. The coupling aperture 220, for example, may project along its aperture centerline 222 through the inner skin 40 to the pilot aperture 146. The aperture centerline 222 of FIG. 16 is coaxial with the aperture centerline 148 of the pilot aperture 146.

In step 424, the finishing tool 150 is removed.

In step 426, a respective one of the fasteners 70 may be mated with the fastener apertures 78 (see FIG. 1) to secure the panel mount 24 to the structural panel preform 22'.

The foregoing method steps may be repeated one or more times to form additional mounting apertures 78 in the structural panel preform 22' and further secure the panel mount 24 to the structural panel preform 22'. Following the formation of the fastener apertures 78, the structural panel preform 22' may become the structural panel 22.

In some embodiments, any one or more of the tool elements 90, 92, 126, 158 and/or 160 may be constructed from polymer material, which may or may not be reinforced with fiber reinforcement material. These tool elements, for example, may be additively manufactured. Thus, the tool elements may be formed as needed based on the specific assembly configuration; e.g., panel mount configuration and/or structural panel configuration. The present disclosure, however, is not limited thereto.

While various embodiments of the present invention have been disclosed, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims and their equivalents.

## Claims

1. A method (400) involving a panel (22), comprising:
(412) drilling a first aperture (146) in the panel (22), the panel (22) extending between a panel first surface (48) and a panel second surface (44) arranged opposite the panel first surface (48), the first aperture (146) projecting into the panel (22) along a first centerline (148) from the panel first surface (48), and the first centerline (148) angularly offset from the panel first surface (48) by a first angle (84);
(418) arranging a first tool (150) with the panel (22), the first tool (150) including a support structure (152), a locator (156) and a drill guide (154), the locator (156) mounted to the support structure (152) and projecting into the first aperture (146), and the drill guide (154) mounted to the support structure (152) and arranged adjacent the panel second surface (44); and
(422) drilling a second aperture (220) in the panel (22) using the drill guide (154), the second aperture (220) projecting into the panel (22) along a second centerline (222) from the panel second surface (44) to the first aperture (146), and the second centerline (222) coaxial with the first centerline (148).

2. The method (400) of claim 1, wherein the first angle (84) is an acute angle, wherein the acute angle (84) is optionally between eighty-five degrees and eighty-nine degrees.

3. The method (400) of claim 1 or 2, wherein:
the first centerline (148) is perpendicular to the panel second surface (44); and/or
the locator (156) comprises a cylindrical pin (190).

4. The method (400) of any preceding claim, wherein:
the drill guide (154) comprises a bushing; and
the second aperture (220) is drilled using a second drill bit (218) that extends through a bore (210) of the bushing.

5. The method (400) of any preceding claim, wherein:
the support structure (152) includes a first support (158), a second support (160) and a channel (188) between the first support (158) and the second support (160);
the first support (158) is located adjacent the panel first surface (48), and the locator (156) is mounted to the first support (158);
the second support (160) is located adjacent the panel second surface (44), and the drill guide (154) is mounted to the second support (160); and
the panel (22) projects into the channel (180).

6. The method (400) of claim 5, wherein:
the locator (156) projects through the first support (158) into the first aperture (146); and/or
the drill guide (154) projects into the second support (160).

7. The method (400) of claim 5 or 6, wherein:
the first support (158) is connected to the second support (160) by an adjustable joint (178), and optionally:
the second support (160) comprises a slot (184) and the first support (158) is connected to the second support (160) by a fastener (180, 182) mated with the slot (184).

8. The method (400) of any preceding claim, further comprising:
(404) arranging a mount (24) with the panel (22), the mount (24) comprising a fastener aperture (78),
wherein the first aperture (146) is drilled using a first drill bit (144) that extends through the fastener aperture (78).

9. The method (400) of claim 8, further comprising:
(408) arranging a second tool (88) with the mount (24), the second tool (88) comprising a second support structure (92) and a second drill guide (94) mounted to the second support structure (92),
wherein the first drill bit (144) extends sequentially through a bore (138) of the second drill guide (94) and the fastener aperture (78) to the panel (22),
the method optionally further comprising moving the second tool (88) along the mount (24) to align the bore (138) of the second drill guide (94) with the fastener aperture (78).

10. The method (400) of claim 9, further comprising:
moving the second support structure (92) along the mount (24) to align the bore (138) of the second drill guide (94) with the fastener aperture (78),
wherein the second tool (88) further comprises a frame (90), and the second support structure (92) is configured to translate within the frame (90).

11. The method (400) of any of claims 8 to 10, wherein:
the panel (22) comprises an acoustic panel; and
the mount (24) comprises an attachment ring for the acoustic panel.

12. A method (400) involving a panel (22) and a mount (24), comprising:
(404) arranging the mount (24) with the panel (22), the mount (24) comprising a fastener aperture (78), the panel (22) extending from a panel first surface (48) to a panel second surface (44) opposite the panel first surface (48), and the mount (24) engaged with the panel first surface (48);
(408) arranging a first tool (88) with the mount (24), the first tool (88) comprising a drill guide (94), and the first tool (88) configured to adjust alignment of a bore (138) of the drill guide (94) with the fastener aperture (78) along a plurality of directions;
(410) inserting a drill bit (144) sequentially through the bore (138) of the drill guide (94) and the fastener aperture (78) to the panel first surface (48); and
(412) drilling a first aperture (146) in the panel (22), the first aperture (146) projecting into the panel (22) along a first centerline (148) from the panel first surface (48), and the first centerline (148) angularly offset from the panel first surface (48) by an acute angle (84).

13. The method (400) of claim 12, wherein:
the panel (22) comprises a first skin (41), a second skin (40) and a cellular core (42) between and connected to the first skin (41) and the second skin (40), the first skin (41) forms the panel first surface (48), and the second skin (40) forms the panel second surface (44); and
the first aperture (146) is drilled such that the first aperture (146) projects through the first skin (41) and at least partially into the cellular core (42) without extending through the second skin (40).

14. The method (400) of claim 12 or 13, further comprising:
(418) arranging a second tool (150) with the panel (22), the second tool (150) including a second support structure (152), a locator (156) and a second drill guide (154), the locator (156) mounted to the second support structure (152) and projecting into the first aperture (146), and the second drill guide (154) mounted to the second support structure (152) and arranged adjacent the panel second surface (44); and
(422) drilling a second aperture (220) in the panel (22) using the second drill guide (154), the second aperture (220) projecting into the panel (22) along a second centerline (222) from the panel second surface (44) to the first aperture (146), and the second centerline (222) coaxial with the first centerline (148).

15. An assembly (20) for drilling a panel (22), comprising:
a support structure (152) including a first support (158), a second support (160) and a channel (188), the first support (158) comprising a first leg (162) and mechanically attached to the second support (160) by an adjustment device (178), the second support (160) comprising a second leg (174), and the channel (188) formed between the first leg (162) and the second leg (174);
a locator (156) connected to the first leg (162), the locator (156) projecting out from a first surface (172) of the first leg (162) along a first centerline (198) into the channel (188) towards the second leg (174), the locator (156) configured to mate with a first aperture (146) in the panel (22), and the first centerline (198) angularly offset from the first surface (172) by an acute angle (200); and
a drill guide (154) connected to the second leg (174), a bore (210) extending through the drill guide (154) along a second centerline (212) that is coaxial with the first centerline (198), and the drill guide (154) configured to receive a drill bit (218) within the bore (210) for drilling a second aperture (220) into the panel (22) that extends to the first aperture (146).
